# EUROPÄISCHE PATENTSCHRIFT

(11) **EP 3 131 700 B1**
(45) Veröffentlichungstag und Bekanntmachung des Hinweises auf die Patenterteilung: **09.05.2018**
(21) Anmeldenummer: 15713706.8
(22) Anmeldetag: 27.03.2015
(51) Int. Cl.: B23K 37/04, B23K 26/08, B23K 26/38

(54) **VERFAHREN ZUM LASERBEARBEITEN EINES WERKSTÜCKS MITTELS EINES LASERSTRAHLS UND ZUGEHÖRIGE LASERBEARBEITUNGSMASCHINE**
DEVICE AND METHOD FOR LASER MACHINING
DISPOSITIF ET MÉTHODE DE TRAVAIL AU LASER

(30) Priorität: 15.04.2014 DE 102014207220
(43) Veröffentlichungstag der Anmeldung: 22.02.2017
(73) Patentinhaber: Trumpf Werkzeugmaschinen GmbH + Co. KG, 71254 Ditzingen (DE)
(72) Erfinder: OTTNAD, Jens, 76199 Karlsruhe (DE); WOLF, Dennis, 71229 Leonberg (DE)
(74) Vertreter: Kohler Schmid Möbus Patentanwälte
(86) Internationale Anmeldenummer: PCT/EP2015/056710
(87) Internationale Veröffentlichungsnummer: WO 2015/158528

(56) Entgegenhaltungen:
- EP-A2- 0 476 965
- DE-A1- 4 123 323
- US-A1- 2010 252 538

## Beschreibung

Die vorliegende Erfindung betrifft ein Verfahren zum Laserbearbeiten eines insbesondere plattenförmigen Werkstücks entlang einer Sollbahn mittels eines Laserstrahls einer Laserbearbeitungsmaschine, wobei ein den Laserstrahl auf das Werkstück ausrichtender Laserbearbeitungskopf zumindest entlang einer Antriebsachse bewegt wird und wobei in Abhängigkeit von der Position des Laserbearbeitungskopfes entlang seiner Antriebsachse eine Maschinenkomponente der Laserbearbeitungsmaschine, welche nicht an der Relativbewegung zwischen dem Werkstück und dem vom Laserbearbeitungskopf ausgehenden Laserstrahl, insbesondere nicht an der Relativbewegung zwischen Werkstück und Laserbearbeitungskopf, beteiligt ist, bewegt wird, sowie auch eine zum Durchführen des Verfahrens geeignete Laserbearbeitungsmaschine zum Laserbearbeiten von Werkstücken entlang einer Sollbahn mittels eines Laserstrahls.

Ein derartiges Verfahren und eine derartige Vorrichtung sind beispielsweise durch die US 2010/252538 A1 bekannt geworden. Hier ist ein Absaugrohr an einer Bewegungseinheit des Laserschneidkopfes derart befestigt, dass sich das Absaugrohr in der X-Achse zusammen mit der Bewegungseinheit und somit mit dem Laserschneidkopf bewegt.

Bei Maschinen mit redundanten Achsen kann die Sollposition eines Werkzeugs durch verschiedene Kombinationen der Bewegungen entlang der redundanten Achsen erreicht werden. Dabei werden zur Erreichung einer möglichst dynamischen Bewegung eine träge (schwere) Grobachse mit großem Bewegungsraum zur Bewegung über das Werkstück (in der Größenordnung Meter) und eine hochbeschleunigbare (leichte) Feinachse mit kleinem Bewegungsraum (in der Größenordnung einige mm bis wenige 10 cm) für das schnelle Abfahren feiner Konturen gekoppelt. Bei Sheetmover-Laserschneidmaschinen, bei denen sowohl das Werkstück als auch der Laserbearbeitungskopf entlang redundanter Achsen bewegt werden, bildet das Bewegen des Blechs die Grobachse und die Bewegung des Laserkopfs die Feinachse.

Um aus der Sollbahn der Bearbeitung die Sollpositionen für beide Achsen zu erhalten, ist es beispielsweise aus der DE 103 55 614 A1 bekannt, die Sollbahn mittels eines Tiefpassfilters zu filtern und die gefilterte Sollbahn der Grobachse zuzuführen. Die Differenz zwischen der gefilterten Sollbahn und der eigentlichen Sollbahn ergibt die Sollbahn für die Feinachse. Die durch das Tiefpassfilter stark geglätteten Sollwerte werden also der weniger dynamischen Grobachse und die Differenz zwischen den geglätteten Sollwerten der Grobachse und den Sollwerten des Achspaars der höher dynamischen Feinachse zugeführt. Um den für das Verfahren notwendigen Bewegungsraum der Feinachse zu minimieren, was höhere Beschleunigungen für diese Achse ermöglicht, wird die Sollbahn dem System erst nach einer Verzögerung zugeführt. Dadurch ist die Sollbahn der Grobachse näher an der Sollbahn des Gesamtsystems. Die redundanten Achsen einer Maschine folgen immer exakt einer Sollposition, allerdings macht diese exakte Ansteuerung bei einigen Anwendungsfällen teure Komponenten und Antriebe erforderlich, obwohl eine solch exakte Ansteuerung nicht notwendig ist.

Im Falle einer CO2-Lasermaschine wird die Weglänge des Laserstrahls durch die Maschine bis zum sich bewegenden Laserkopf durch eine Strahlposaune konstant gehalten, da sich ansonsten die Strahleigenschaften mit zunehmender Weglänge ändern würden und somit bei variabler Weglänge nicht immer die gleiche Strahlqualität am Laserbearbeitungspunkt gewährleistet wäre. Der Laserkopf verfährt dabei im Bereich von µm genau, und die Strahlposaune wird mit den Solldaten des verfahrenden Laserkopfs korreliert verfahren. Allerdings hat eine Abweichung der Weglänge des Laserstrahls von einigen mm oder sogar cm keinen allzu großen Einfluss auf die Strahlqualität am Laserbearbeitungspunkt.

Weiterhin ist aus der DE 10 2013 226 818.1 eine Laserbearbeitungsmaschine bekannt, bei der das Werkstück von zwei verfahrbaren Unterstützungsschlitten unterstützt wird. Die beiden Unterstützungsschlitten lassen dabei einen gewissen Spalt unter dem Werkstück offen, durch die der Laserstrahl tritt, und folgen in ihrer Position dem darüber befindlichen Laserkopf, so dass der Laserstrahl und die beim Schneiden entstehende Schlacke nicht auf die Unterstützungsschlitten treffen. Die bewegten Unterstützungsschlitten sollen eine möglichst durchgängige Blechunterstützung bieten, bei der nur ein für den Schneidprozess notwendiger Mindestspalt ausgespart bleibt. Die Unterstützungsschlitten werden mit der gleichen Dynamik bewegt wie der Laserkopf, also bspw. mit 20 m/s² Beschleunigung und 2000 m/s³ Ruck, was die Konstruktion aufwändig und teuer macht. Der Abstand zwischen der Mitte der beiden Unterstützungsschlitten und dem Laserstrahl bleibt dabei immer konstant. Darüber hinaus kommen die Schlitten erst zum Stillstand, wenn auch die fliegende Y-Achse steht, was der Prozesssicherheit beim Ausschleusen prinzipiell nicht zuträglich ist.

Es ist demgegenüber die Aufgabe der Erfindung, bei einem Laserbearbeitungsverfahren der eingangs genannten Art die Ansteuerung der nicht an der Relativbewegung zwischen Werkstück und Laserbearbeitungskopf beteiligten Maschinenkomponente zu vereinfachen und dadurch günstigere Antriebe für die Maschinenkomponente zu ermöglichen.

Diese Aufgabe wird erfindungsgemäß dadurch gelöst, dass aus Antriebsachsensollwerten des Laserbearbeitungskopfes entlang seiner Antriebsachse niederfrequente Antriebsachsensollwerte herausgefiltert werden und dass die Bewegung der Maschinenkomponente mittels der niederfrequenten Antriebsachsensollwerte gesteuert wird.

Der entscheidende Vorteil der Erfindung besteht darin, dass die Bewegung der nicht an der Relativbewegung zwischen dem Werkstück und dem vom Laserbearbeitungskopf ausgehenden Laserstrahl, insbesondere nicht an der Relativbewegung zwischen Werkstück und Laserbearbeitungskopf, beteiligten Maschinenkomponente nicht mit der Dynamik des Laserbearbeitungskopfes, sondern mit dessen niederfrequenten Antriebsachsensollwerten, also mit einer deutlich reduzierten Dynamik, gesteuert wird. Diese reduzierte Dynamik stellt deutlich geringere Anforderungen an die Konstruktion und den Antriebsstrang der Maschinenkomponente.

Bei einer bevorzugten Verfahrensvariante der Erfindung ist die Maschinenkomponente eine im Strahlengang des Laserstrahls vor dem Laserbearbeitungskopf angeordnete, in Laserstrahlrichtung verfahrbare Strahlposaune ist, die in Abhängigkeit von der Position des Laserbearbeitungskopfes verfahren wird und so die Weglänge des Laserstrahls durch die Laserbearbeitungsmaschine bis zum sich bewegenden Laserbearbeitungskopf zumindest annähernd konstant hält. Da eine Abweichung der Weglänge des Laserstrahls von einigen mm oder sogar cm keinen allzu großen Einfluss auf die Strahlqualität am Laserbearbeitungspunkt hat, braucht die Strahlposaune nicht mit der hohen Dynamik des Laserbearbeitungskopfes verfahren zu werden, sondern kann anhand der niederfrequenten Antriebsachsensollwerte des Laserbearbeitungskopfes verfahren werden, so dass die Weglänge ungefähr konstant bleibt und weniger dynamische günstigere bzw. Antriebe zum Einsatz kommen können.

Bei einer anderen bevorzugten Verfahrensvariante der Erfindung ist die Maschinenkomponente mindestens ein Werkstück-Unterstützungsschlitten, der in einem Spalt einer Werkstückauflage der Laserbearbeitungsmaschine entlang der Antriebsachse des Laserbearbeitungskopfes bewegt wird. Vorzugsweise wird das Werkstück von zwei verfahrbaren Unterstützungsschlitten unterstützt, die einen gewissen Spalt unter dem Werkstück für einen Durchtritt des Laserstrahls offenlassen und in ihrer Position dem darüber befindlichen Laserbearbeitungskopf folgen, damit der Laserstrahl und die beim Schneiden entstehende Schlacke nicht auf die Unterstützungsschlitten treffen. Da zumindest bei größeren Werkstücken die Unterstützungsschlitten zur Auflage der Werkstücke nicht sehr eng zusammengefahren werden müssen, ist es unproblematisch, wenn der Laserstrahl etwas außermittig zwischen die beiden Unterstützungsschlitten trifft. Dadurch, dass innerhalb des Spalts zwischen den Unterstützungsschlitten ein variabler Abstand zwischen Unterstützungsschlitten und Laserstrahl in der gemeinsamen (redundanten) Antriebsachse zugelassen wird, müssen die Schlitten nicht mehr exakt dem Laserstrahl bzw. der Bauteilkontur folgen. Insbesondere bei filigranen Bauteilkonturen kann auf diese Weise die bisher notwendige Dynamik der Unterstützungsschlitten erheblich reduziert werden, da sich der Abstand Laserstrahl zu Unterstützungsschlitten nun hochdynamisch in den zulässigen Grenzen bewegen kann. Im Gegensatz zur aktuell angestrebten hohen Dynamik des Laserbearbeitungskopfes (20 m/s² Beschleunigung, 2000 m/s³ Ruck) führt die reduzierte Dynamik der Unterstützungsschlitten zu einer Beschleunigung von nur 8 m/s² und einem Ruck von nur 100 m/s³, also eine Reduktion der notwendigen Beschleunigung um 60% und des benötigten Rucks um 95%. Insbesondere der dramatisch geringere Ruck sorgt für eine sehr viel kleinere Schwingungsanregung des unterstützten Blechs, was sich positiv auf die Genauigkeit und Schnittqualität auswirkt.

Besonders bevorzugt werden ab einem Zeitpunkt, der um mindestens die Bremszeit des mindestens einen Unterstützungsschlittens oder eines Werkstückantriebs vor der Freischnittendposition eines Werkstückteils liegt, die Antriebsachsensollwerte für die Bewegung des mindestens einen Unterstützungsschlittens auf einen konstanten Antriebsachsensollwert überführt, insbesondere geschaltet, so dass der mindestens eine Unterstützungsschlitten spätestens an der Freischnittendposition des Werkstückteils zum Stehen kommt. Diese Maßnahme hat den Vorteil, dass bereits vor dem Schnittende keine Relativbewegung zwischen Unterstützungsschlitten und dem unterstützen Werkstück mehr stattfindet und somit das Überlappen oder Verhaken von freigeschnittenen Werkstückteilen mit dem Restwerkstück sicher und zuverlässig verhindert wird.

Die Erfindung betrifft in einem weiteren Aspekt auch eine Laserbearbeitungsmaschine zum Laserbearbeiten eines insbesondere plattenförmigen Werkstücks entlang einer Sollbahn mittels eines Laserstrahls, mit einem Antrieb zum Bewegen eines den Laserstrahl auf das Werkstück ausrichtenden Laserbearbeitungskopfes zumindest entlang einer Antriebsachse und mit einem Antrieb zum Bewegen einer Maschinenkomponente, welche nicht an der Relativbewegung zwischen dem Werkstück und dem vom Laserbearbeitungskopf ausgehenden Laserstrahl, insbesondere nicht an der Relativbewegung zwischen Werkstück und Laserbearbeitungskopf, beteiligt ist, in Abhängigkeit von der Position des Laserstrahls oder des Laserbearbeitungskopfes entlang seiner Antriebsachse, wobei erfindungsgemäß eine Filtereinrichtung vorgesehen ist, die aus zugeführten Antriebsachsensollwerten des Laserbearbeitungskopfes entlang seiner Antriebsachse niederfrequente Antriebsachsensollwerte filtert, welche die Antriebsachsensollwerte des Antriebs der Maschinenkomponente bilden.

Bevorzugt weist die Filtereinrichtung ein Tiefpassfilter, wie z.B. ein FIR Filter, mit oder ohne einen vorgeordneten Verzögerer auf, um aus den zugeführten Antriebsachsensollwerten die niederfrequenten Antriebsachsensollwerte zu filtern. Dabei werden die Solldaten des Laserbearbeitungskopfs entlang seiner Antriebsachse tiefpassgefiltert, und die tiefpassgefilterten Solldaten werden zur Steuerung der Maschinenkomponente eingesetzt. Daher kommt es zwar zu geringen Abweichungen der Maschinenkomponenten- von der Laserbearbeitungskopfposition, aber die Maschinenkomponente benötigt wesentlich geringere Beschleunigung/Ruck, um der Position des Laserbearbeitungskopfs zu folgen. Die Filterauslegung kann für jede Blechdicke bzw. jeden maximalen Vorschub individuell eingestellt werden, so dass der vergrößerte Schneidbereich nur in den Fällen genutzt wird, wo er auch erforderlich ist. Anstelle eines FIR Filters könnte ein beliebiges Filterelement genutzt werden, das eine Tiefpasscharakteristik aufweist und so zu einer Verrundung der Bewegung der Maschinenkomponente führt.

Die Filtereinrichtung weist in vorteilhafter Weiterbildung einen dem Tiefpassfilter vorgeordneten ansteuerbaren Schalter auf, der in seiner einen Schaltstellung die zugeführten Antriebsachsensollwerte und in seiner anderen Schaltstellung einen konstanten Antriebsachsensollwert an das Tiefpassfilter weiterleitet. Dem mindestens einen Unterstützungsschlitten wird kurz vor der Freischnittendposition ein konstanter Sollwert zugeführt, so dass bereits vor dem Schnittende der mindestens eine Unterstützungsschlitten zum Stehen kommt und keine Relativbewegung zwischen Werkstück und Unterstützungsschlitten mehr stattfindet. Idealerweise wird der Umschaltzeitpunkt derart gewählt, dass der mindestens eine Unterstützungsschlitten gerade in dem Moment zum Stillstand kommt, in dem der Laserstrahl die Freischnittendposition erreicht.

Weitere Vorteile der Erfindung ergeben sich aus den Ansprüchen, der Beschreibung und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: eine erfindungsgemäße Laserschneidmaschine mit einem entlang der X-Achse verfahrbaren Werkstück, einem entlang der X- und Y-Achsen verfahrbaren Laserschneidkopf und einer Filtereinrichtung zur Erzeugung von niederfrequenten Antriebsachsensollwerten für einen Schlittenantrieb zweier entlang der Y-Achse verfahrbarer Unterstützungsschlitten;
- Fig. 2: eine Detailansicht der in einem Spalt der Werkstückauflage in Y-Richtung verfahrbaren Unterstützungsschlitten;
- Fign. 3a, 3b: zwei Ausführungsformen der in Fig. 1 gezeigten Filtereinrichtung mit einem Tiefpassfilter ohne Zeitverzögerung (Fig. 3a) und mit einem Tiefpassfilter mit Zeitverzögerung (Fig. 3b);
- Fign. 4a, 4b: die Bewegungskurven des Laserstrahls auf dem Werkstück und der Spaltmitte zwischen den beiden Unterstützungsschlitten beim Laserschneiden zweier quadratischer Werkstückteile (Fig. 4a), sowie den zeitlichen Verlauf der aus den Antriebsachsensollwerten des Laserbearbeitungskopfes gefilterten niederfrequenten und hochfrequenten Antriebsachsensollwerte des Schlittenantriebs beim Schneiden der beiden quadratischen Werkstückteile (Fig. 4b);
- Fign. 5a, 5b: eine weitere Ausführungsformen der in Fig. 1 gezeigten Filtereinrichtung mit einem Tiefpassfilter mit Zeitverzögerung (Fig. 5a), sowie den zeitlichen Geschwindigkeitsverlauf der der aus den Antriebsachsensollwerten des Laserbearbeitungskopfes gefilterten niederfrequenten und hochfrequenten Antriebsachsensollwerte des Schlittenantriebs beim Schneiden zweier quadratischer Werkstückteile (Fig. 5b); und
- Fig. 6: eine erfindungsgemäße CO2-Laserschneidmaschine mit einer Filtereinrichtung zur Erzeugung von niederfrequenten Antriebsachsensollwerten für einen Antrieb einer Strahlposaune.

In der folgenden Figurenbeschreibung werden für gleiche bzw. funktionsgleiche Bauteile identische Bezugszeichen verwendet.

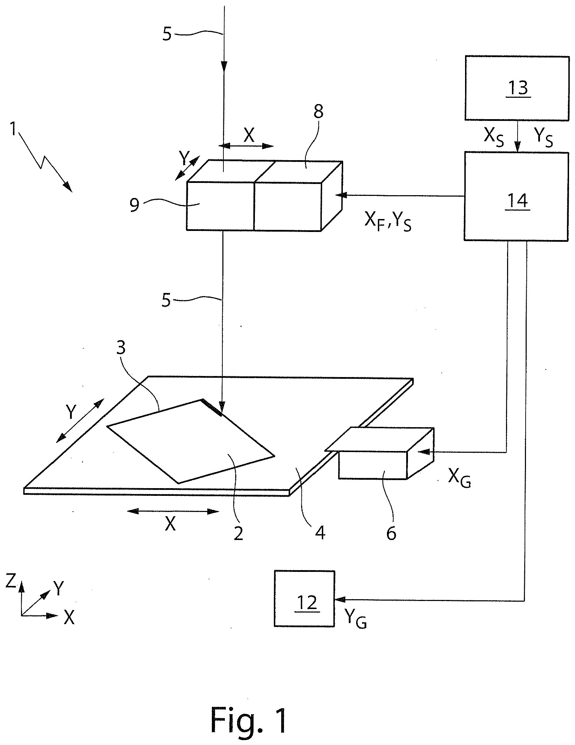

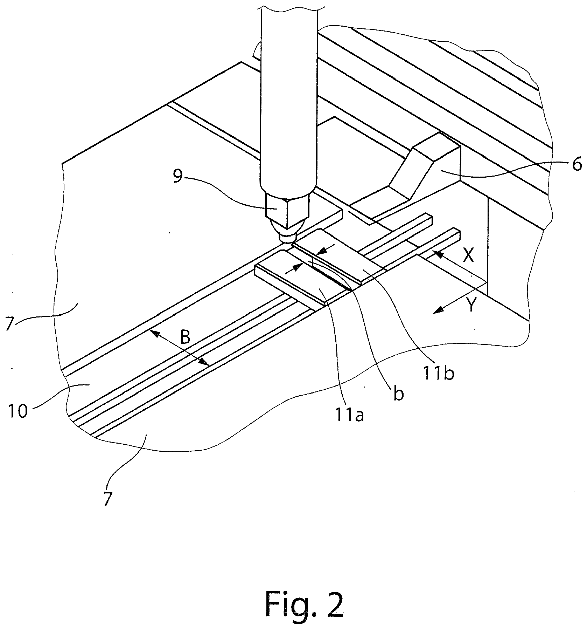

Die in **Fig. 1** gezeigte Laserschneidmaschine **1** dient zum Laserschneiden von Werkstückteilen **2** entlang einer Sollbahn **3** aus einem plattenförmigen Werkstück (z.B. Blech) **4** mittels eines Laserstrahls **5.** Die Laserschneidmaschine 1 umfasst einen ersten Antrieb ("Werkstückantrieb") **6** zum Bewegen des auf einer Werkstückauflage **7** (Fig. 2) aufliegenden Werkstücks 4 in der XY-Ebene entlang der X-Achse und einen zweiten Antrieb ("Laserschneidkopfantrieb") **8** zum Bewegen eines den Laserstrahl 5 auf das Werkstück 4 ausrichtenden Laserschneidkopfes **9** entlang der X- und Y-Achsen. Der Laserstrahl 5 wird von einem in Fig. 1 nicht gezeigten Laserstrahlerzeuger, z.B. Festkörperlaser, erzeugt und dem Laserschneidkopf 9 zugeführt.

Wie in **Fig. 2** gezeigt, ist in der Werkstückauflage 7 ein Spalt **10** gebildet, der sich in der Y-Richtung über den gesamten Verfahrweg des Laserschneidkopfes 9 erstreckt und dessen Spaltbreite **B** größer als der maximale Verfahrweg des Laserschneidkopfes 9 in der X-Richtung ist. Mithilfe des Laserschneidkopfantriebs 8 können der Laserschneidkopf 9 und damit der austretende Laserstrahl 5 sowohl in X-Richtung als auch in Y-Richtung an eine gewünschte Schneidkopfposition innerhalb des Spaltes 10 positioniert werden. Innerhalb des Spaltes 10 sind zwei Unterstützungsschlitten **11a, 11b** angeordnet, die sich jeweils über die gesamte Spaltbreite B erstrecken und in dem Spalt 10 in Y-Richtung gesteuert und unabhängig voneinander mittels eines Schlittenantriebs **12** verfahrbar sind.

Die Unterstützungsschlitten 11a, 11b können in dem Spalt 10 jeweils an eine gewünschte Position in Y-Richtung bewegt werden, um dort die von dem Werkstück 4 freizuschneidenden Werkstückteile 4 zu unterstützen. Für eine möglichst durchgängige Blechunterstützung entspricht der Schlittenabstand b der Unterstützungsschlitten 11a, 11b dem für den Schneidprozess notwendigen Mindestmaß, damit der Laserstrahl 5 zwischen den Unterstützungsschlitten 11a, 11b ungehindert hindurchtreten kann. Beim Laserschneiden des Werkstückteils 2 werden die Unterstützungsschlitten 11a, 11b in Y-Richtung synchron zueinander, d.h. mit konstantem Schlittenabstand b, verfahren und folgen in ihrer Position dem darüber befindlichen Laserschneidkopf 9, damit sich der Laserstrahl 5 stets innerhalb des Spalts 10 befindet und somit der Laserstrahl 5 und die beim Schneiden entstehende Schlacke nicht auf die Unterstützungsschlitten 11a, 11b treffen. Die Unterstützungsschlitten 11a, 11b werden also in Abhängigkeit von der jeweiligen Y-Position des Laserschneidkopfes 9 verfahren.

Wie in Fig. 1 weiter gezeigt, umfasst die Laserschneidmaschine 1 außerdem eine Maschinensteuerung **13,** die die Laserbearbeitung steuert und dazu Sollwerte **XS, YS** für die Sollbahn des Laserstrahls 5 auf dem Werkstück 4 liefert, und eine Filtereinrichtung **14** zur Bewegungsaufteilung der Sollwerte XS der Sollbahn 3 des Laserstrahls 5 entlang der redundanten X-Achse in niederfrequente Antriebsachsensollwerte **XG** für den Werkstückantrieb 6 und in höherfrequente Antriebsachsensollwerte **XF** für den Laserschneidkopfantrieb 8. Die Sollwerte YS der Sollbahn 3 des Laserstrahls 5 werden von der Filtereinrichtung 14 unverändert als Antriebsachsensollwerte an den Laserschneidkopfantrieb 8 weitergegeben, da hier keine Bahnaufteilung im eigentlichen Sinne benötigt wird. Aus den Sollwerten YS der Sollbahn 3 des Laserschneidkopfes 9 entlang der Y-Achse filtert die Filtereinrichtung 14 jedoch auch niederfrequente Antriebsachsensollwerte YG heraus, mittels derer der Schlittenantrieb 13 der Unterstützungsschlitten 11a, 11b gesteuert wird.

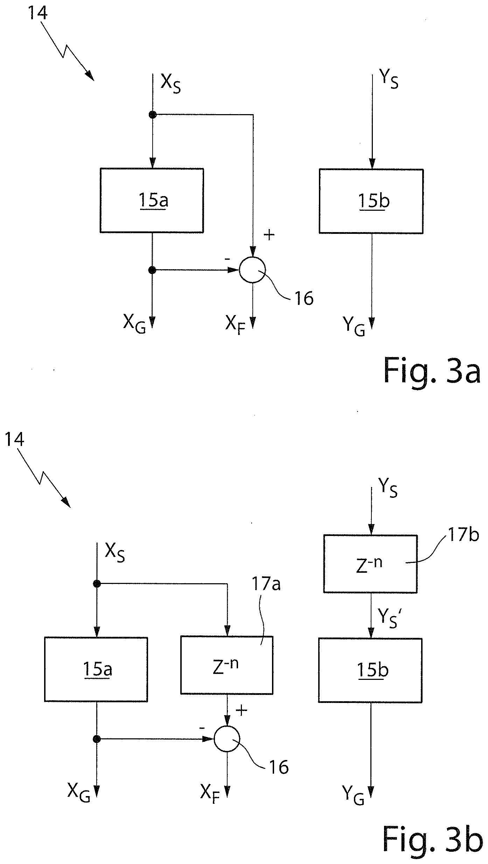

**Fig. 3a** zeigt ein erstes Ausführungsbeispiel der Filtereinrichtung 14, die ein erstes Tiefpassfilter **15a** ohne Zeitverzögerung und einen Subtrahierer **16** für die Antriebsachse X aufweist. Das Tiefpassfilter 15a ist ein linearphasiges FIR-Filter mit konstanter Gruppenlaufzeit und filtert aus den zugeführten Antriebsachsensollwerten XS die niederfrequenten Antriebsachsensollwerte XG heraus und leitet sie an den Werkstückantrieb 6 weiter. Der Subtrahierer 16 ermittelt die hochfrequenten Antriebsachsensollwerte XF als Differenz zwischen den zugeführten Antriebsachsensollwerten XS und den gefilterten Antriebsachsensollwerten XG und leiten sie an den Laserschneidkopfantrieb 8 weiter. Die durch den Tiefpassfilter 15a stark geglätteten niederfrequenten Antriebsachsensollwerte XG werden also der weniger dynamischen Grobachse des Werkstückantriebs 6 zugeführt, und die Differenz zwischen den ursprünglichen Antriebsachsensollwerten XS und den geglätteten Antriebsachsensollwerten XG der Grobachse wird der höher dynamischen Feinachse des Laserschneidkopfantriebs 8 zugeführt. Die Filtereinrichtung 14 weist ein zweites Tiefpassfilter **15b** ohne Zeitverzögerung auf, das aus den zugeführten Antriebsachsensollwerten YS die niederfrequenten Antriebsachsensollwerte YG herausfiltert und an den Schlittenantrieb 12 weiterleitet.

Im Unterschied zu Fig. 3a werden bei dem in **Fig. 3b** gezeigten zweiten Ausführungsbeispiel der Filtereinrichtung 14 die zugeführten Antriebsachsensollwerten XS mittels eines Verzögerers **17a** zeitverzögert dem Subtrahierer 12 zugeführt. Dadurch liegt einerseits die Sollbahn der Grobachse näher an der Sollbahn des Gesamtsystems und wird andererseits der für das Verfahren notwendige Bewegungsraum der Feinachse minimiert, was höhere Beschleunigungen für diese Achse ermöglicht. Außerdem werden die zugeführten Antriebsachsensollwerten YS mittels eines Verzögerers **17b** um eine Filtergruppenlaufzeit zeitverzögert (YS') und an das zweite Tiefpassfilter 15b weiterleitet, das die niederfrequenten Antriebsachsensollwerte XG an den Schlittenantrieb 12 weiterleitet.

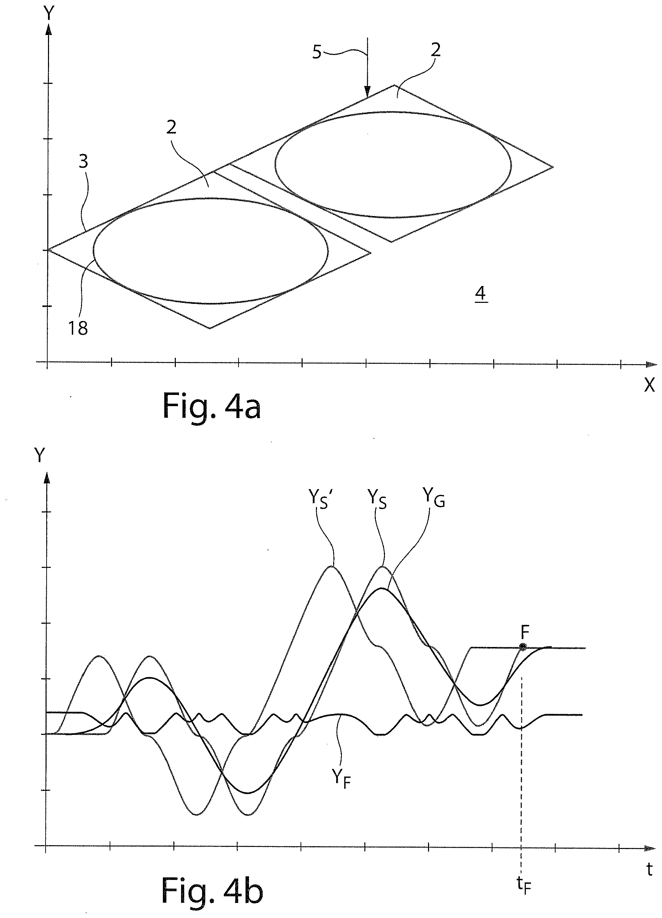

**Fig. 4a** zeigt am Beispiel zweier im Arbeitsraum um 45° geneigter quadratischer Werkstückteile 2 die Sollkontur 3 des Laserstrahls 5 auf dem Werkstück 4 und die mit der in Fig. 3b gezeigten zeitverzögerten Filtereinrichtung 14 tiefpassgefilterte, verrundete Bewegungsbahn **18** der Unterstützungsschlitten 11a, 11b bzw. ihrer Schlittenspaltmitte. Der Abstand zwischen der Schlittenbahn und dem Laserstrahl 5 ist dabei veränderlich, wobei in den Werkstückteilecken der Abstand größer wird. In diesen Eckbereichen wird eine besonders hohe Dynamik (Beschleunigung, Ruck) von dem Laserschneidkopfantrieb 8 geleistet. Dadurch, dass in diesen Bereichen der Laserstrahl 5 aus der Schlittenspaltmitte hin zu einer Schlittenkante wandert, können die Unterstützungsschlitten 11a, 11b mit einer signifikant kleineren Dynamik der Sollkontur 3 folgen.

In **Fig. 4b** ist der Y-Anteil der Bewegung für das Schneiden der quadratischen Werkstückteile 2 aus Fig. 4a dargestellt, also der zeitliche Verlauf der zugeführten Antriebsachsensollwerte YS, der verzögerten Antriebsachsensollwerte YS', der niederfrequenten Antriebsachsensollwerte YG und der höherfrequenten Antriebsachsensollwerte YF. Diese höherfrequenten Antriebsachsensollwerte YF entsprechen dem Abstand des Laserstrahls 5 zur Schlittenspaltmitte der Unterstützungsschlitten 11a, 11b und werden nicht weiterverarbeitet. Bei einem Abstand der beiden Unterstützungsschlitten 11a, 11b von 40 mm ergibt sich im Ruhezustand ein Abstand von 20 mm zwischen Laserstrahl 5 zu jedem der beiden Unterstützungsschlitten 11a, 11b. In der Freischnittendposition **F,** also zum Zeitpunkt t_{F}, ist das zweite Werkstückteil 2 ausgeschnitten, wobei die beiden Unterstützungsschlitten 11a, 11b noch nachlaufen.

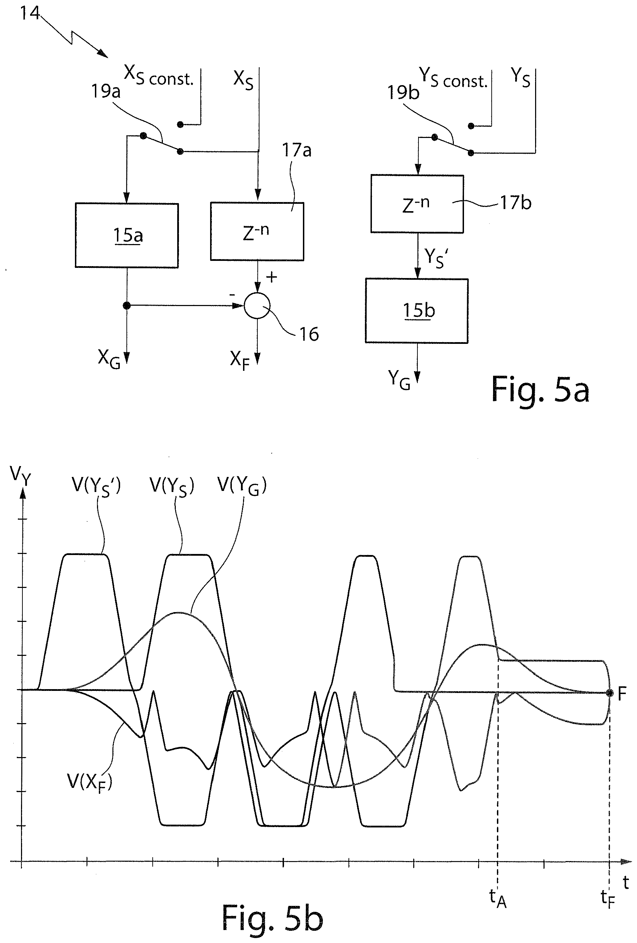

Von der Filtereinrichtung der Fig. 3b unterscheidet sich die in **Fig. 5a** gezeigte Filtereinrichtung 14 dadurch, dass hier dem ersten Tiefpassfilter 15a ein erster Schalter **19a** und dem zweiten Verzögerer 17b ein zweiter Schalter **19b** vorgeordnet sind, die jeweils von der Maschinensteuerung 13 angesteuert werden. Der erste Schalter 19a leitet in seiner gezeigten, einen Schaltstellung die zugeführten Antriebsachsensollwerten XS und in seiner anderen Schaltstellung einen konstanten Antriebsachsensollwert XS_{const} an das erste Tiefpassfilter 15a weiter. Der zweite Schalter 19b leitet in seiner gezeigten, einen Schaltstellung die zugeführten Antriebsachsensollwerten YS und in seiner anderen Schaltstellung einen konstanten Antriebsachsensollwert YS_{const} an den zweiten Verzögerer 17b weiter.

In **Fig. 5b** sind die zeitlichen Änderungen ("Geschwindigkeitsverläufe") v(Y_{S}), v(Y_{S}'), v(Y_{G}), v(Y_{F}) der zugeführten Antriebsachsensollwerte YS, der verzögerten Antriebsachsensollwerte YS', der niederfrequenten Antriebsachsensollwerte YG und der höherfrequenten Antriebsachsensollwerte YF dargestellt, wie sie beim Schneiden der quadratischen Werkstückteile 2 aus Fig. 4a auftreten. Zum Zeitpunkt t_{A}, der um mindestens die Bremszeit der Unterstützungsschlitten 11a, 11b oder des Werkstückantriebs 6, je nachdem welche Bremszeit länger ist, vor Erreichen der Freischnittendposition F des zweiten Werkstückteils 2 zum Zeitpunkt t_{F} liegt, werden die beiden Schalter 19a, 19b auf die konstanten Antriebsachsensollwerte YS_{const} bzw. YS_{const} umgeschaltet, so dass sowohl das Werkstück 4 als auch die beiden Unterstützungsschlitten 11a, 11b spätestens an der Freischnittendposition F des Werkstückteils 2 zum Stehen kommen. Dadurch wird eine Relativbewegung zwischen dem freigeschnittenen Werkstückteil 2 und den Unterstützungsschlitten 11a, 11b unterbunden, die ansonsten zu einem Überlappen oder Verhaken von freigeschnittenen Werkstückteilen mit den Unterstützungsschlitten 11a, 11b führen könnte.

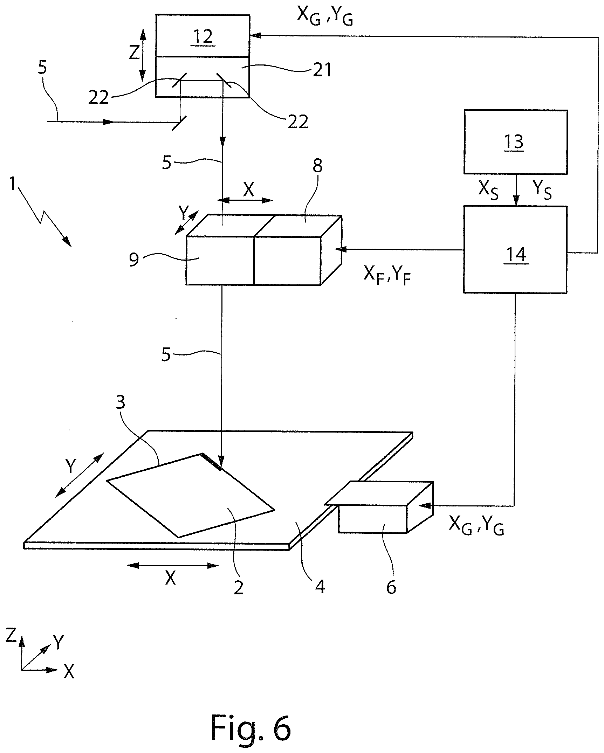

Von der Laserschneidmaschine der Fig. 1 unterscheidet sich die in **Fig. 6** gezeigte CO2-Laserschneidmaschine 1 lediglich dadurch, dass hier der Antrieb 12 zum Verfahren einer Strahlposaune **21** in Z-Richtung dient. Die Strahlposaune 21 weist zwei Umlenkspiegel **22** auf, die den dem Laserschneidkopf 9 in Freistrahlpropagation zugeführten CO2-Laserstrahl 5 in Z-Richtung U-förmig umlenken. Die Strahlposaune 21 wird in Z-Richtung in Abhängigkeit von der X-Y-Position des Laserschneidkopfes 9 verfahren, um so die Weglänge des Laserstrahls 5 durch die Laserbearbeitungsmaschine 1 bis zum sich bewegenden Laserschneidkopf 9 zumindest annähernd konstant zu halten. Dazu leitet die Filtereinrichtung 14 die niederfrequenten Antriebsachsensollwerte XG, YG als Steuerdaten an den Antrieb 12 weiter, so dass die Strahlposaune 21 nicht mit der Dynamik des Laserschneidkopfes 9, sondern mit deutlich reduzierter Dynamik bewegt wird.

## Patentansprüche

1. Verfahren zum Laserbearbeiten eines insbesondere plattenförmigen Werkstücks (4) entlang einer Sollbahn (3) mittels eines Laserstrahls (5) einer Laserbearbeitungsmaschine (1), wobei ein den Laserstrahl (5) auf das Werkstück (4) ausrichtender Laserbearbeitungskopf (9) zumindest entlang einer Antriebsachse (Y) bewegt wird und wobei in Abhängigkeit von der Position des Laserbearbeitungskopfes (9) entlang seiner Antriebsachse (Y) eine Maschinenkomponente (11a, 11b; 21) der Laserbearbeitungsmaschine (1), welche nicht an der Relativbewegung zwischen dem Werkstück (4) und dem vom Laserbearbeitungskopf (9) ausgehenden Laserstrahl (5), insbesondere nicht an der Relativbewegung zwischen Werkstück (4) und Laserbearbeitungskopf (9), beteiligt ist, bewegt wird,
**dadurch gekennzeichnet,**
**dass** aus Antriebsachsensollwerten (YS) des Laserbearbeitungskopfes (9) entlang seiner Antriebsachse (Y) niederfrequente Antriebsachsensollwerte (YG) herausgefiltert werden und dass die Bewegung der Maschinenkomponente (11a, 11b; 21) mittels der niederfrequenten Antriebsachsensollwerte (YG) gesteuert wird.

2. Verfahren nach Anspruch 1, **dadurch gekennzeichnet, dass** die Maschinenkomponente eine im Strahlengang des Laserstrahls (5) vor dem Laserbearbeitungskopf (9) angeordnete, in Laserstrahlrichtung verfahrbare Strahlposaune (21) ist, die in Abhängigkeit von der Position des Laserbearbeitungskopfes verfahren wird und so die Weglänge des Laserstrahls (5) durch die Laserbearbeitungsmaschine (1) bis zum sich bewegenden Laserbearbeitungskopf (9) zumindest annähernd konstant hält.

3. Verfahren nach Anspruch 1, **dadurch gekennzeichnet, dass** die Maschinenkomponente mindestens ein Werkstück-Unterstützungsschlitten (11a, 11b) ist, der in einem Spalt (10) einer Werkstückauflage (7) der Laserbearbeitungsmaschine (1) entlang der Antriebsachse (Y) des Laserbearbeitungskopfes (9) bewegt wird.

4. Verfahren nach Anspruch 3, **dadurch gekennzeichnet, dass** ab einem Zeitpunkt, der um mindestens die Bremszeit des mindestens einen Unterstützungsschlittens (11a, 11b) oder eines Werkstückantriebs (6) vor der Freischnittendposition (F) eines Werkstückteils (2) liegt, die Antriebsachsensollwerte für die Bewegung des mindestens einen Unterstützungsschlittens (11a, 11b) auf einen konstanten Antriebsachsensollwert (YS_{const}) überführt, insbesondere geschaltet werden, so dass der mindestens eine Unterstützungsschlitten (11a, 11b) spätestens an der Freischnittendposition (F) des Werkstückteils (2) zum Stehen kommt.

5. Laserbearbeitungsmaschine (1) zum Laserbearbeiten eines insbesondere plattenförmigen Werkstücks (4) entlang einer Sollbahn (3) mittels eines Laserstrahls (5), mit einem Antrieb (8) zum Bewegen eines den Laserstrahl (5) auf das Werkstück (4) ausrichtenden Laserbearbeitungskopfes (9) zumindest entlang einer Antriebsachse (Y) und mit einem Antrieb (12) zum Bewegen einer Maschinenkomponente (11a, 11b; 21), welche nicht an der Relativbewegung zwischen dem Werkstück (4) und dem vom Laserbearbeitungskopf (9) ausgehenden Laserstrahl (5), insbesondere nicht an der Relativbewegung zwischen Werkstück (4) und Laserbearbeitungskopf (9), beteiligt ist, in Abhängigkeit von der Position des Laserstrahls (5) oder des Laserbearbeitungskopfes (9) entlang seiner Antriebsachse (Y),
**dadurch gekennzeichnet,**
**dass** eine Filtereinrichtung (14) vorgesehen ist, die aus zugeführten Antriebsachsensollwerten (YS) des Laserbearbeitungskopfes (9) entlang seiner Antriebsachse (Y) niederfrequente Antriebsachsensollwerte (YG) filtert, welche die Antriebsachsensollwerte des Antriebs (12) der Maschinenkomponente (11a, 11b; 21) bilden.

6. Laserbearbeitungsmaschine nach Anspruch 5, **dadurch gekennzeichnet, dass** die Filtereinrichtung (14) ein Tiefpassfilter (15b) aufweist, das aus den zugeführten Antriebsachsensollwerten (YS) die niederfrequenten Antriebsachsensollwerte (YG) filtert.

7. Laserbearbeitungsmaschine nach Anspruch 6, **dadurch gekennzeichnet, dass** die Filtereinrichtung (14) einen dem Tiefpassfilter (15b) vorgeordneten Verzögerer (17b) aufweist, der die zugeführten Antriebsachsensollwerten (YS) zeitlich verzögert.

8. Laserbearbeitungsmaschine nach Anspruch 6 oder 7, **dadurch gekennzeichnet, dass** die Filtereinrichtung (14) einen dem Tiefpassfilter (15b) vorgeordneten ansteuerbaren Schalter (19b) aufweist, der in seiner einen Schaltstellung die zugeführten Antriebsachsensollwerte (YS) und in seiner anderen Schaltstellung einen konstanten Antriebsachsensollwert (YS_{const}) an das Tiefpassfilter (15b) weiterleitet.

9. Laserbearbeitungsmaschine nach einem der Ansprüche 5 bis 8, **dadurch gekennzeichnet, dass** die Maschinenkomponente eine im Strahlengang des Laserstrahls (5) vor dem Laserbearbeitungskopf (9) angeordnete, in Laserstrahlrichtung verfahrbare Strahlposaune (21) ist, welche die Weglänge des Laserstrahls (5) durch die Laserbearbeitungsmaschine (1) bis zum sich bewegenden Laserbearbeitungskopf (9) zumindest annähernd konstant hält.

10. Laserbearbeitungsmaschine nach einem der Ansprüche 5 bis 8, **dadurch gekennzeichnet, dass** die Maschinenkomponente mindestens ein Unterstützungsschlitten (12a, 12b) ist, der in einem Spalt (10) einer Werkstückauflage (7) der Laserbearbeitungsmaschine (1) entlang der Antriebsachse (Y) des Laserbearbeitungskopfes (9) bewegt wird.

## Claims

1. Method for laser processing of an, in particular, plate-shaped workpiece (4) along a target path (3) by means of a laser beam (5) of a laser processing machine (1), wherein a laser processing head (9) that directs the laser beam (5) to the workpiece (4) is moved at least along one drive axis (Y) and wherein a machine component (11a, 11b; 21) of the laser processing machine (1) which is not involved in the relative movement between the workpiece (4) and the laser beam (5) emitted by the laser processing head (9), in particular not involved in the relative movement between the workpiece (4) and the laser processing head (9), is moved in dependence on the position of the laser processing head (9) along its drive axis (Y),
**characterized in that**
low-frequency drive axis target values (YG) are filtered out from drive axis target values (YS) of the laser processing head (9) along its drive axis (Y) and the movement of the machine component (11a, 11b; 21) is controlled using the low-frequency drive axis target values (YG).

2. Method according to claim 1, **characterized in that** the machine component is a beam trombone (21) which is arranged in the optical path of the laser beam (5) upstream of the laser processing head (9), can be moved in the laser beam direction and is moved in dependence on the position of the laser processing head, thereby keeping the path length of the laser beam (5) through the laser processing machine (1) to the moving laser processing head (9) at least approximately constant.

3. Method according to claim 1, **characterized in that** the machine component is at least a workpiece supporting carriage (11a, 11b) which is moved in a gap (10) of a workpiece support (7) of the laser processing machine (1) along the drive axis (Y) of the laser processing head (9).

4. Method according to claim 3, **characterized in that** starting from a point in time which is before the final cut-off position (F) of a workpiece part (2) by at least the braking time of the at least one supporting carriage (11a, 11b) or of a workpiece drive (6), the drive axis target values for movement of the at least one supporting carriage (11a, 11b) are transferred, in particular switched, to a constant drive axis target value (YS_{const}) such that the at least one supporting carriage (11a, 11b) comes to a stop at the latest at the final cut-off position (F) of the workpiece part (2).

5. Laser processing machine (1) for laser processing of an, in particular, plate-shaped workpiece (4) along a target path (3) by means of a laser beam (5), comprising a drive (8) for moving a laser processing head (9), which directs the laser beam (5) to the workpiece (4), at least along a drive axis (Y), and a drive (12) for moving a machine component (11a, 11b; 21), which is not involved in the relative movement between the workpiece (4) and the laser beam (5) emitted by the laser processing head (9), in particular not involved in the relative movement between the workpiece (4) and the laser processing head (9), in dependence on the position of the laser beam (5) or of the laser processing head (9) along its drive axis (Y),
**characterized in that**
a filtering device (14) is provided which filters out low-frequency drive axis target values (YG) from supplied drive axis target values (YS) of the laser processing head (9) along its drive axis (Y), which form the drive axis target values of the drive (12) of the machine component (11a, 11b; 21).

6. Laser processing machine according to claim 5, **characterized in that** the filtering device (14) comprises a low-pass filter (15b) which filters out the low-frequency drive axis target values (YG) from the supplied drive axis target values (YS).

7. Laser processing machine according to claim 6, **characterized in that** the filtering device (14) comprises a retarder (17b) which is arranged upstream of the low-pass filter (15b) and temporally delays the supplied drive axis target values (YS).

8. Laser processing machine according to claim 6 or 7, **characterized in that** the filtering device (14) comprises a controllable switch (19b) which is arranged upstream of the low-pass filter (15b) and which, in one of its switch positions, transfers the supplied drive axis target values (YS) to the low-pass filter (15b) and in the other switch position transfers a constant drive axis target value (YS_{const}) to the low-pass filter (15b).

9. Laser processing machine according to any one of the claims 5 to 8, **characterized in that** the machine component is a beam trombone (21) which is arranged in the optical path of the laser beam (5) upstream of the laser processing head (9), can be moved in the laser beam direction and keeps the path length of the laser beam (5) through the laser processing machine (1) up to the moving laser processing head (9) at least approximately constant.

10. Laser processing machine according to any one of the claims 5 to 8, **characterized in that** the machine component is at least one supporting carriage (12a, 12b) which is moved in a gap (10) of a workpiece support (7) of the laser processing machine (1) along the drive axis (Y) of the laser processing head (9).

## Revendications

1. Procédé d'usinage au laser d'une pièce (4) notamment en forme de plaque, le long d'une trajectoire de consigne (3), au moyen d'un faisceau laser (5) d'une machine (1) d'usinage au laser, sachant qu'une tête (9) d'usinage au laser, orientant ledit faisceau laser (5) sur ladite pièce (4), est mise en mouvement le long d'au moins un axe d'entraînement (Y), et sachant qu'en fonction de l'emplacement de ladite tête (9) d'usinage au laser le long de son axe d'entraînement (Y), un mouvement est imprimé à un composant (11a, 11b ; 21) de ladite machine (1) d'usinage au laser qui ne prend pas part au mouvement relatif entre la pièce (4) et le faisceau laser (5) sortant de la tête (9) d'usinage au laser, notamment pas au mouvement relatif entre ladite pièce (4) et ladite tête (9) d'usinage au laser,
**caractérisé par le fait**
**que** des valeurs de consigne (YG) de basse fréquence, relatives à l'axe d'entraînement, sont filtrées sur la base de valeurs de consigne (YS) relatives à l'axe d'entraînement de la tête (9) d'usinage au laser, le long de son axe d'entraînement (Y) ; et par le fait que le mouvement du composant (11a, 11b; 21) de la machine est commandé au moyen desdites valeurs de consigne (YG) de basse fréquence, relatives à l'axe d'entraînement.

2. Procédé selon la revendication 1, **caractérisé par le fait que** le composant de la machine est un diffuseur (21) qui est disposé avant la tête (9) d'usinage au laser sur la trajectoire du faisceau laser (5), peut être déplacé dans la direction dudit faisceau laser, est déplacé en fonction de l'emplacement de ladite tête d'usinage au laser et maintient, de la sorte, au moins approximativement constante la longueur d'onde dudit faisceau laser (5) parcourant la machine (1) d'usinage au laser jusqu'à ladite tête (9) d'usinage au laser accomplissant un mouvement.

3. Procédé selon la revendication 1, **caractérisé par le fait que** le composant de la machine est au moins un chariot (11a, 11b) de soutien de pièces qui est mû, le long de l'axe d'entraînement (Y) de la tête (9) d'usinage au laser, dans un interstice (10) d'une surface (7) d'appui des pièces dans la machine (1) d'usinage au laser.

4. Procédé selon la revendication 3, **caractérisé par le fait qu'**à partir d'un instant avoisinant au moins le temps de freinage du chariot de soutien (11a, 11b) à présence minimale, ou d'un entraînement (6) des pièces avant l'emplacement extrême (F) de découpe d'une partie (2) de pièce, les valeurs de consigne relatives à l'axe d'entraînement, dévolues au mouvement dudit chariot de soutien (11a, 11b) à présence minimale, sont converties en une valeur de consigne constante (YS_{const}) relative à l'axe d'entraînement et entrent notamment en action de façon telle que ledit chariot de soutien (11a, 11b), à présence minimale, se mette à l'arrêt au plus tard audit emplacement extrême (F) de découpe de ladite partie (2) de pièce.

5. Machine (1) d'usinage au laser conçue pour usiner, au laser, une pièce (4) notamment en forme de plaque, le long d'une trajectoire de consigne (3), au moyen d'un faisceau laser (5), comprenant un entraînement (8) affecté à la mise en mouvement d'une tête (9) d'usinage au laser orientant ledit faisceau laser (5) sur ladite pièce (4), au moins le long d'un axe d'entraînement (Y), et un entraînement (12) affecté à la mise en mouvement d'un composant (11a, 11b; 21) de la machine qui ne prend pas part au mouvement relatif entre la pièce (4) et le faisceau laser (5) sortant de la tête (9) d'usinage au laser, notamment pas au mouvement relatif entre ladite pièce (4) et ladite tête (9) d'usinage au laser, en fonction de l'emplacement dudit faisceau laser (5) ou de ladite tête (9) d'usinage au laser le long de son axe d'entraînement (Y),
**caractérisée par le fait**
**qu'**il est prévu un dispositif de filtrage (14) qui filtre, sur la base de valeurs de consigne attribuées (YS) relatives à l'axe d'entraînement de la tête (9) d'usinage au laser, le long de son axe d'entraînement (Y), des valeurs de consigne (YG) de basse fréquence relatives à l'axe d'entraînement et formant les valeurs de consigne relatives à l'axe d'entraînement de l'entraînement (12) du composant (11a, 11b; 21) de la machine.

6. Machine d'usinage au laser selon la revendication 5, **caractérisée par le fait que** le dispositif de filtrage (14) est muni d'un filtre passe-bas (15b) qui filtre les valeurs de consigne (YG) de basse fréquence, relatives à l'axe d'entraînement, sur la base des valeurs de consigne attribuées (YS) relatives à l'axe d'entraînement.

7. Machine d'usinage au laser selon la revendication 6, **caractérisée par le fait que** le dispositif de filtrage (14) est pourvu d'un retardateur (17b) implanté en amont du filtre passe-bas (15b) et provoquant une temporisation des valeurs de consigne attribuées (YS) relatives à l'axe d'entraînement.

8. Machine d'usinage au laser selon la revendication 6 ou 7, **caractérisée par le fait que** le dispositif de filtrage (14) est doté d'un commutateur pilotable (19b) qui est implanté en amont du filtre passe-bas (15b) et qui transmet audit filtre passe-bas (15b), dans l'une de ses positions de commutation, les valeurs de consigne attribuées (YS) relatives à l'axe d'entraînement et, dans son autre position de commutation, une valeur de consigne constante (YS_{const}) relative à l'axe d'entraînement.

9. Machine d'usinage au laser selon l'une des revendications 5 à 8, **caractérisée par le fait que** le composant de la machine est un diffuseur (21) qui est disposé avant la tête (9) d'usinage au laser sur la trajectoire du faisceau laser (5), peut être déplacé dans la direction dudit faisceau laser, et maintient au moins approximativement constante la longueur d'onde dudit faisceau laser (5) parcourant ladite machine (1) d'usinage au laser jusqu'à ladite tête (9) d'usinage au laser accomplissant un mouvement.

10. Machine d'usinage au laser selon l'une des revendications 5 à 8, **caractérisée par le fait que** le composant de la machine est au moins un chariot de soutien (11a, 11b) qui est mû, le long de l'axe d'entraînement (Y) de la tête (9) d'usinage au laser, dans un interstice (10) d'une surface (7) d'appui des pièces dans ladite machine (1) d'usinage au laser.
